# EUROPEAN PATENT APPLICATION

(11) **EP 2 921 251 A1**
(43) Date of publication of application: **23.09.2015**
(21) Application number: 13854972.0
(22) Date of filing: 10.10.2013
(51) Int. Cl.: B23K 26/08, B23K 10/00, B23K 26/38, B23Q 7/04

(54) **THERMAL CUTTING SYSTEM**

(30) Priority: 13.11.2012 JP 2012249092
(71) Applicant: Murata Machinery, Ltd., Kyoto-shi, Kyoto 601-8326 (JP)
(72) Inventor: KATSUYAMA, Daisuke, Inuyama-shi Aichi 484-8502 (JP)
(74) Representative: Zimmermann, Tankred Klaus
(86) International application number: PCT/JP2013/077558
(87) International publication number: WO 2014/077059

(57) **Abstract**

A thermal cutting system includes a thermal cutting machine (1), a work lifting device (5) and a component carry device (3). The thermal cutting machine (1) includes a work support table (12), which has a plurality of work support sections (13) for supporting a sheet material workpiece (W) from below, each of the work support sections (13) being formed in a pin support shape or a serrated shape. The thermal cutting machine (1) is operable to thermally cut a component part (W1) from the sheet material workpiece (W) then placed on the work support table (12). The work lifting device (5) is operable to lift the sheet material workpiece (W), which has been thermally cut, from the work support table (12). The component part carry device (3) is operable to pick up the component part (W1) from the sheet material workpiece (W), which has been lifted by the work lifting device (5), and then carry it to the outside of the cutting machine (1).

## Description

### CROSS REFERENCE TO THE RELATED APPLICATION

This application is based on and claims Convention priority to Japanese patent application No. 2012-249092, filed November 13, 2012, the entire disclosure of which is herein incorporated by reference as a part of this application.

### BACKGROUND OF THE INVENTION

### (Field of the Invention)

The present invention relates to a thermal cutting system for cutting a plate-shaped workpiece or a sheet material workpiece with the use of a thermal cutting machine such as, for example, a laser beam cutting machine or a plasma arc cutting machine.

### (Description of Related Art)

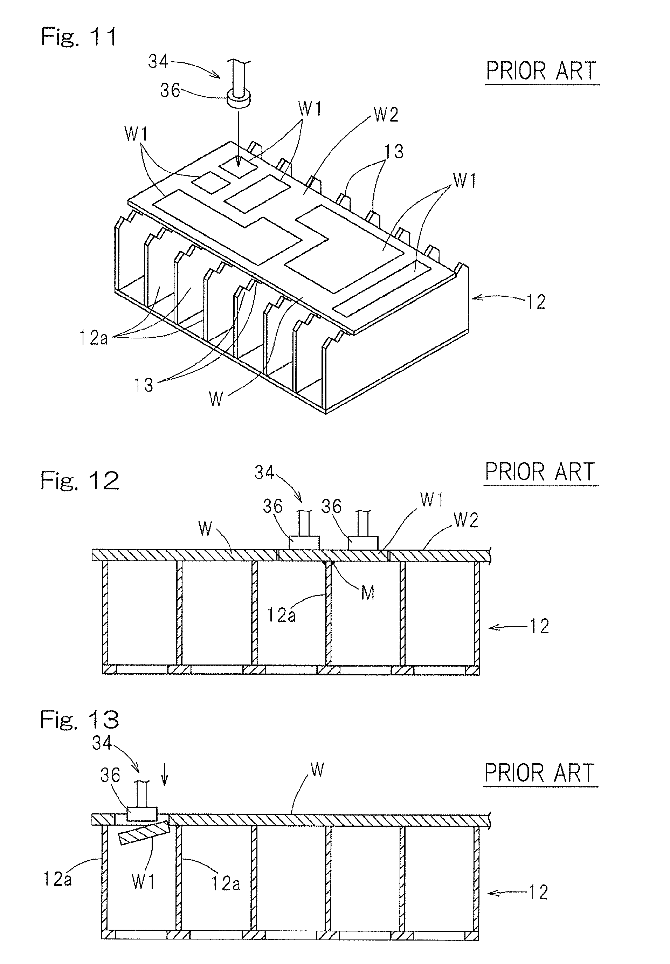

Generally in the thermal cutting machine such as, for example, a laser beam cutting machine or a plasma arc cutting machine, a sheet material workpiece after the cutting process is carried out in the following manner. Namely, the sheet material workpiece, on which the cutting process has been worked to cut a component part from the work at the processing station of the thermal cutting machine, is moved to a retracted position neighboring the processing station. Subsequently, as shown in Fig. 11, at the retracted position, only the component part cut from the sheet material workpiece is picked up by a sheet material carrier body 34 having a work suction means such as, for example, a suction pad 36, and the component part W1 is subsequently carried to the outside of the thermal cutting machine. After the component part W1 has been carried in the manner described above, the remaining material W2, which is the sheet material workpiece from which the component parts have been removed, is delivered to the outside of the thermal cutting machine by means of the sheet material carrier body 34 or any suitable means (not shown).

As another carry method, the patent document 1 listed below discloses the carry of the component part together with the remaining material. In such case, the need exists in that after the sheet material workpiece has been carried, the component and the remaining material have to be manually sorted.

### [Prior Art Literature]

Patent Document 1: JP Laid-open Patent Publication No. H11-254165

As shown in, for example, Fig. 11, a work support table 12 on which the sheet material workpiece W is placed supports the sheet material workpiece W from below by a plurality of work support sections 33. In the example as shown, a plurality of work support plates 12a, having the plurality of the work support sections 13 linearly disposed, are juxtaposed in a direction parallel to the direction of disposition of the work support sections 13. The reason for the work support table 12 designed to represent the above described structure is for the purpose of avoiding, as much as possible, the possibility of the sheet material workpiece W and the work support table 12 would be thermally welded or melted under the influence of heat, evolved during the thermal cutting process.

It has, however, been found that even though the work support table 12 is so constructed as hereinabove discussed, the thermal welding or melting of the sheet material workpiece W and the work support table 12 together cannot be avoided completely. As shown in Fig. 12, it may occur that in the event of the thermal welding of a component part W1 and the work support plate 12a of the work support table 12 takes place at a welding portion M, the component part W1 can no longer be picked up by the sheet material carrier body 34.

Also, if the work support table 12 is of the construction discussed above, particularly where the component part W1 has a dimension smaller than the space or interval of the work support plate 12a, it may occur that the component part W1 may fall in between the neighboring two work support plates 12a, as shown in Fig. 13, when the suction pad 36 of the sheet material carrier body 34 is pressed to the component part W1 from above to pick up such component part W1. While the component part W1 is supported by the remaining material W2 with its cut faces contacting the remaining material W2, the force of support by this contact, that is, the force of bearing the component part W1 through this contact, is so small that the component part W1 may fall down by the effect of a pressing force of the suction pad 36. Once the component part W1 falls down, the component part W1 is no longer picked up by the sheet material carrier body 34.

### SUUMMARY OF THE INVENTION

In view of the foregoing, the present invention has for its object to provide a thermal cutting system capable of assuredly pick up and carry a component part thermally cut from a sheet material workpiece.

In order to accomplish the foregoing object, the present invention provides a thermal cutting system including a thermal cutting machine, which includes a work support table having a plurality of work support sections for supporting a sheet material workpiece from below, each of the work support sections is formed in a pin support shape or a serrated shape, and the thermal cutting machine is operable to thermally cut a component part from the sheet material workpiece then placed on the work support table. The thermal cutting system referred to above includes a work lifting device configured to lift the sheet material workpiece, which has been thermally cut, from the work support table, and a component part carry device configured to pick up the component part from the sheet material workpiece lifted by the work lifting device and then carrying it to the outside of the cutting machine. The work support section referred to above may be of a type having a certain surface area so that he sheet material workpiece can be supported from below.

According to the present invention, after the thermal cutting machine cuts the component part from the sheet material workpiece placed on the work support table, the work lifting device lifts the sheet material workpiece from the work support table. Accordingly, even though a portion of the sheet material workpiece is thermally welded to the work support table under the influence of heat evolved during the cutting process, a thermally welding portion so formed can be disjoined. Subsequently, the component part carry device picks up the component part from the sheet material workpiece lifted by the work lifting device, and then delivers it to the outside of the thermal cutting machine. Even though at the time the component carry device picks up the component part, a portion of the component carry device is pressed from above against the component part, the component part is supported from below by the work lifting device, and therefore, there is no possibility that the component part may fall in between the work support sections of the work support table. In view of the above, the component part, cut from the sheet material workpiece by means of the cutting process, can be assuredly picked up and is then delivered.

In a preferred embodiment of the present invention, the work lifting device may include a plurality of elevating elements which are brought into contact with an undersurface of the sheet material workpiece, and the elevating elements are capable of moved up and down at a location between the work support sections of the work support table. If the work lifting device is of a structure having the plurality of elevating elements, with each of the elevating elements positioned between the work support sections of the work support table which has been formed to represent a pin support shape or a serrated shape, the sheet material workpiece can be lifted from the work support table.

In another preferred embodiment of the present invention, the work support table may be changeable in position between a processing position, at which the thermal cutting machine performs a cutting process on the sheet material workpiece, and a retracted position spaced a distance from the processing position, in which case the work lifting device is capable of moving in and out below the work support table then held at the retracted position, and the lifting device lifts the sheet material workpiece on the work support table when the work support table is positioned below the work support table. According to this structural feature, while the work lifting device and the component part carry device performs the carry operation relative to the sheet material workpiece on the work support table then held at the retracted position, the cutting process can be performed by the thermal cutting machine relative to the sheet material workpiece on the work support table then held at the processing position and, hence, the processing efficiency is increased.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a front elevational view showing a thermal cutting system designed in accordance with a preferred embodiment of the present invention;
Fig. 2 is a top plan view showing the thermal cutting system;
Fig. 3 is a side view showing a sheet material transport device employed in the thermal cutting system;
Fig. 4 is a perspective view showing a work support table employed in the thermal cutting system;
Fig. 5 is an explanatory diagram showing the sequence of replacing a work support table;
Fig. 6 is an explanatory diagram showing the sequence of positioning of a sheet material workpiece at the time such sheet material workpiece is carried in a thermal cutting machine employed in the thermal cutting system;
Fig. 7 is a perspective view showing the work support table, a portion of a work lifting device and the sheet material workpiece all in the thermal cutting system;
Fig. 8 is an explanatory diagram showing the sequence of picking up a component part from the sheet material workpiece;
Fig. 9 is a perspective view showing a portion of a modified form of the work support table;
Fig. 10 is a perspective view showing a portion of a modified form of the work lifting device;
Fig. 11 is a perspective view showing the work support table and the sheet material workpiece both employed in the conventional thermal cutting system;
Fig. 12 is a diagram showing a state assumed while the component part is picked up from the sheet material workpiece; and
Fig. 13 is a diagram showing a different state while the component part is picked up from the sheet material workpiece.

### DESCRIPTION OF PREFERRED EMBODIMENTS

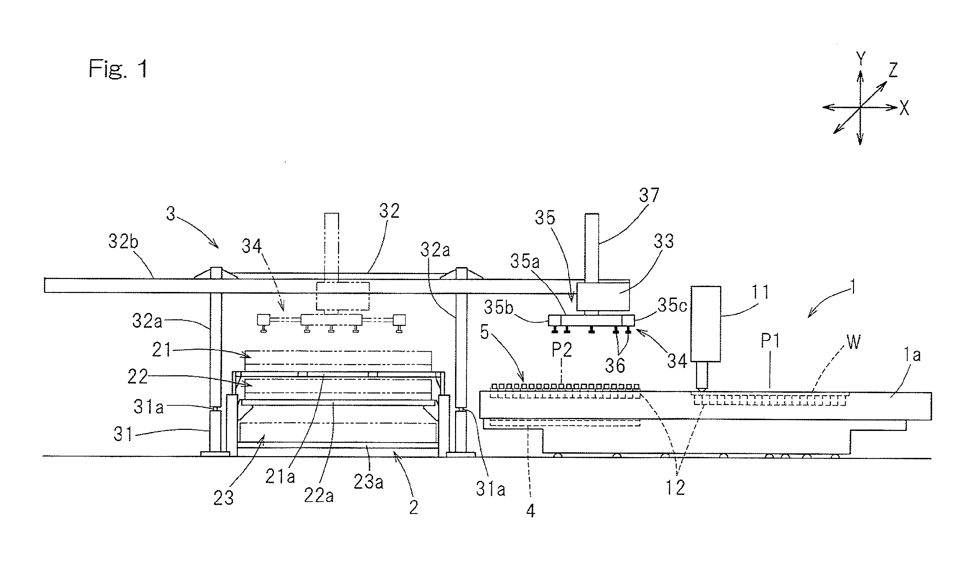

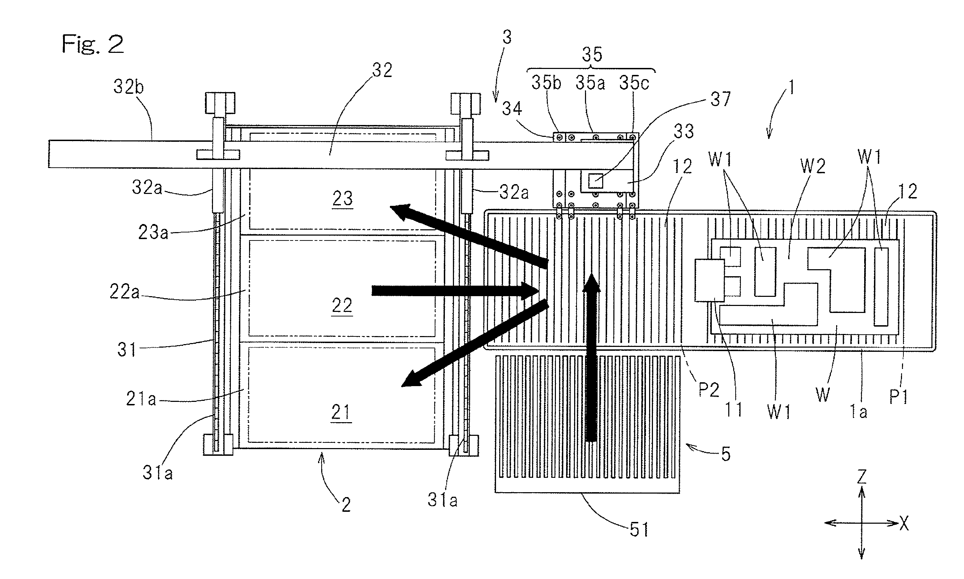

A preferred embodiment of the present invention will now be described in detail with particular reference to the accompanying drawings. Fig. 1 is a front elevational view showing an entire thermal cutting system designed in accordance with a preferred embodiment of the present invention, and Fig. 2 is a top plan view thereof. The illustrated thermal cutting system includes a thermal cutting machine 1 in the form of, for example, a laser beam machine, a sheet material storage device 2 installed laterally next to the thermal cutting machine 1, a sheet material transport device 3 for transporting various sheet materials successively between the thermal cutting machine 1 and the sheet material storage device 2, a work support device 4 used to position a sheet material workpiece W when the sheet material workpiece W is to be carried in the thermal cutting machine 1, and a work lifting device 5 used to carry a component part W1 from the thermal cutting machine 1. The sheet material transport device 3 is an example of a component carry device and, in the case of the embodiment now under discussion, the sheet material transport device 3 has, in addition to a function as the component carry-out device, a function of carrying in the sheet material workpiece W and a function of carrying-out a remaining material W2 of the sheet material workpiece W from which the component part W1 is cut out. It is to be noted that the various sheet materials referred to above mean the sheet material workpiece, the component part W1 and the remaining material W2.

The thermal cutting machine 1 includes a laser head 11 capable of moving in a forward and rearward direction (Z-axis direction), a leftward and rightward direction (X-axis direction) and an up and down direction (Y-axis direction), and this leaser head 11 performs a cutting process on the sheet material workpiece W while moving in the forward and rearward direction and also in the leftward and rightward direction relative to the sheet material workpiece W, placed on a work support table 12, to irradiate the sheet material workpiece W with a laser beam.

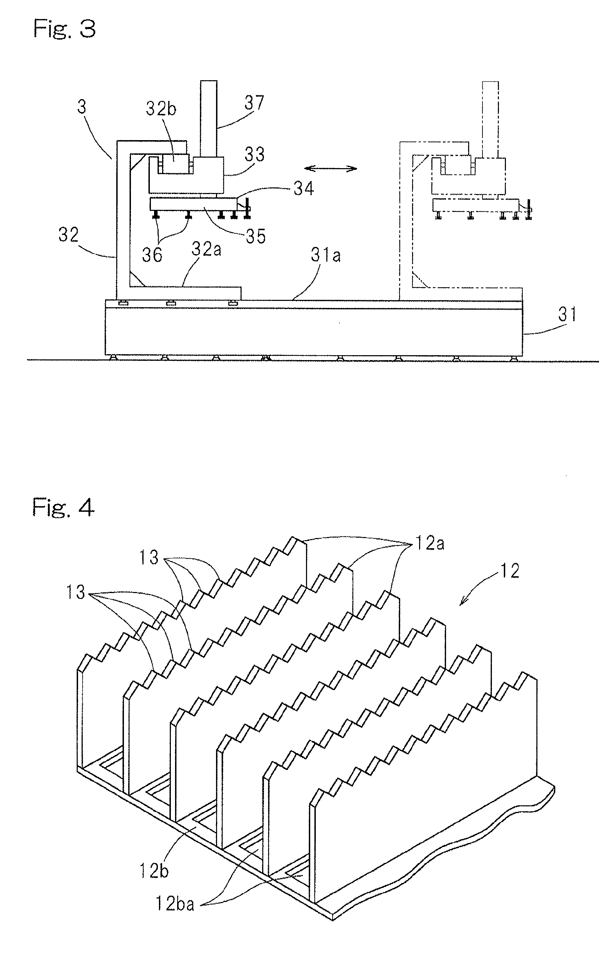

As shown in Fig. 4, the work support table 12 includes a plurality of work support plates 12a arranged in parallel relation to each other, each of those work support plates 12a having an upper edge portion so shaped as to represent a serrated shape. The work support plates 12a have respective lower ends fixed to a base plate 12b. Serrations forming the serrated shape define work support sections 13 which support the sheet material workpiece W from below. Those work support sections 13 may not be necessary held in point contact with the sheet material workpiece W and may be of a shape having a certain surface area of contact with the sheet material workpiece W. The work support table 12 is so shaped as hereinabove described, for the purpose that, by lessening the contact surface area with the sheet material workpiece W, the possibility of the sheet material workpiece W being thermally welded to the work support table 12 under the influence of heat evolved during the cutting process can be reduced as much as possible. Portions of the base plate 12b, each delimited between the neighboring work support plates 12a, is formed with a slit 12ba through which a ball support body 42 (as will be described later) can pass.

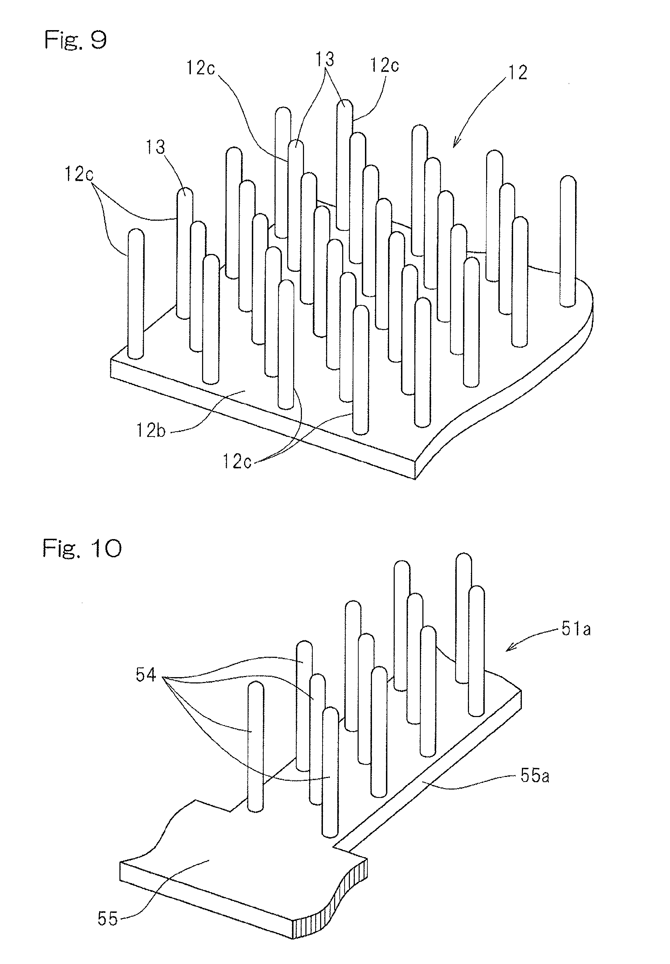

In order to lessen the surface area of contact between the work support table 12 and the sheet material workpiece W, as shown in Fig. 9, the work support table 12 may be so shaped as to assume a pin support or pin holder in which a plurality of work support pins 12c extend upright from the base plate 12b. In the example as shown in Fig. 9, each of the work support pins 12c has a tip end so shaped as to represent a semispherical shape. In such case, the semispherically shaped tip ends of the work support pins 12c define the respective work support sections 13 referred to previously.

As shown in Fig. 2, the work support table 12 is employed two in number for each of the thermal cutting machines 1. Those two work support tables 12 are changeable in position between a processing position P1, at which the sheet material workpiece W can be thermally cut by the laser head 11, and a retracted position P2 defined between the processing position P1 and the sheet material storage device 2. As a position changing mechanism for the work support table 12, a mechanism (not shown) for moving horizontally between the processing position P1 and the retracted position P2 and a mechanism (not shown) for elevating the work support table 12 at the retracted position P2 are possessed, but those mechanisms are of a known structure and, therefore, the details thereof are not herein set forth.

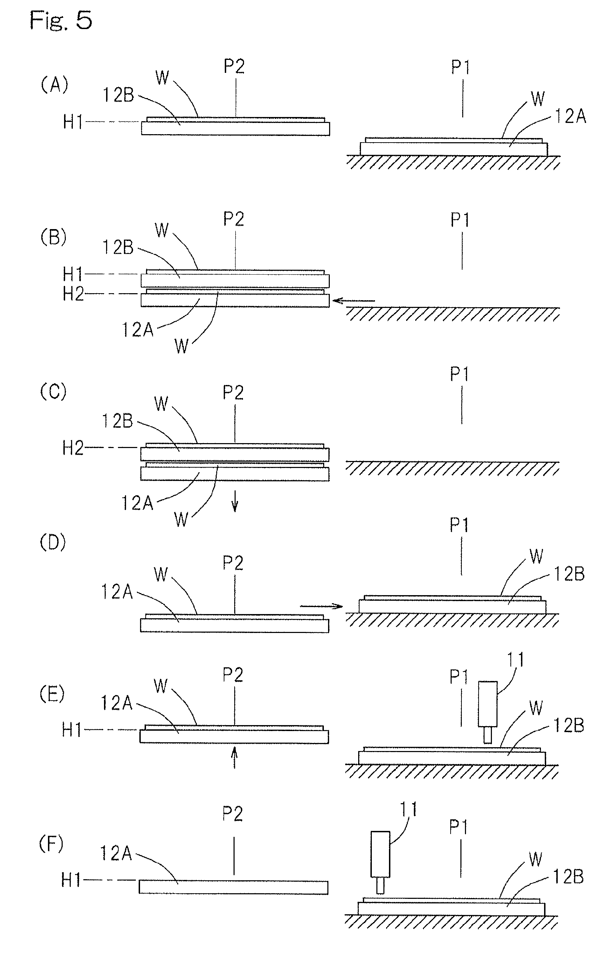

The position changing operation of the two work support tables 12 (first and second work support tables 12A and 12B) are such as shown at operations (A) to (F) in Fig. 5. Operation (A) of Fig. 5 shows the condition in which the thermal cutting process applied to the sheet material workpiece W placed on the first work support table 12A has been terminated. At this time, the second work support table 12B is held in a standby position at a work carry-in and carry-out height H1 in the retracted position P2, which height H1 is higher than the heightwise level of the processing position P1. An unprocessed sheet material workpiece W, which has not yet been processed, is placed on the second work support table 12B. It is to be noted that the respective heights of the first and second work support tables 12A and 12B at the processing position P1 are fixed.

Upon completion of the cutting process of the perimeter of the component part W1 relative to the sheet material workpiece W, as shown at operation (B) in Fig. 5, the first work support table 12A is horizontally moved to the retracted position P2 to assume a position immediately beneath the second work support table 12B. The height of the first work support table 12A at this time is a position changing height H2 that is at the same heightwise level as the processing position P1.

Subsequently, as shown at operation (C) in Fig. 5, the first and second work support tables 12A and 12B descends together and the second work support table 12B assumes the position changing height H2 Then, as shown at operation (D) in Fig. 5, the second work support table 12B is horizontally moved to the processing position P1.

As shown at operation (E) in Fig. 5, the cutting process is effected to the sheet material workpiece W held on the second work support table 12B at the processing position P1 by the laser head 11. During the cutting process taking place, the first work support table 12A is elevated to the work carry-in and carry-out height H1. Then, by the sheet material transport device 3 (best shown in Figs. 1 to 3), the remaining material W2 and the component part W1 are carried from the processed sheet material workpiece W on the first work support table 12A to thereby establish such a condition as shown at operation (F) in Fig. 5.

Subsequently, with the unprocessed sheet material workpiece W being carried on the first work support table 12A , the condition shown at operation (A) in Fig. 5 is resumed. It is, however, to be noted that the first work support table 12A and the second work support table 12B are replaced with each other. The details of the carry operations of the various sheet materials performed by the sheet material transport device 3 will be described later.

As shown in Figs. 1 and 2, the sheet material storage device 2 includes a component part storing unit 21 for storing the component part W1, a raw material storing unit 22 for storing the sheet material workpiece W which is a raw material, and a remaining material storing unit 23 for storing the remaining material W2, and these storing units 21, 22 and 23 arranged side by side in the forward and rearward direction. In each of the various storing units 21, 22 and 23, the component part W1, the sheet material workpiece W and the remaining material W2 are placed on respective pallets 21a, 22a and 23a.

Referring to Figs. 1 to 3, the sheet material transport device 3 includes a stationary stand 31 placed on a floor surface, a movable stand 32 which extends a distance in the leftward and rightward direction and is mounted on the stationary stand 31 for movement in the forward and rearward direction, a traveling body 33 movably installed along the movable stand 32 and a sheet material carrier body 34 mounted on this traveling body 33 for movement up and down. Accordingly, the sheet material carrier body 34 is capable of moving in three-axis directions including the forward and rearward direction, the leftward and rightward direction and the up and down direction.

Specifically, the stationary stand 31 has a pair of fixed rails 31 a extending along left and right sides of the sheet material storage device 2, and a leg portion 32a of the movable stand 32 is supported for movement along the fixed rails 31 a. The movable stand 32 includes a rail 32b extending in the leftward and rightward direction, and the traveling body 33 is installed for movement along this rail 32b.

The sheet material carrier body 34 includes a plurality of suction pads 36 provided in a pad mounting frame 35 and having been arranged forwardly and rearwardly as well as leftwardly and rightwardly, and the sheet material workpiece W is held by those suction pads 36 having been sucked thereby. Each of the suction pads 36 is of, for example, a vacuum suction type and are connected with a suction device (not shown) by means of tubing. The pad mounting frame 35 referred to above includes a main frame 35a and extendable frames 35b and 35c on left and right sides of the main frame 35a. Depending on the shape and the dimension of a sheet material to be held, the extendable frames 35b and 35c can be telescopically adjusted in the leftward and rightward direction relative to the main frame 35a. Also, the pad mounting frame 35 is provided at a lower end of a lifting rod 37 capable of moving up and down relative to the traveling body 33, and hence, the sheet material carrier body 34 can be lifted up or down as the lifting rod 37 is lifted up or down, respectively.

The sheet material transport device 3 performs carry-in and carry-out of the sheet material while the various sheet materials are held and transported by the sheet material carrier body 34. In other words, the sheet material workpiece W is loaded onto the work support table 12 then positioned at the retracted position P2 of the thermal cutting machine 1. Also, from the sheet material workpiece W on the work support table 12 then held at the retracted position P2, the component part W1 is carried to the component part storing unit 21. In addition, after the component part W1 has been carried, the remaining material W2 is carried to the remaining material storing unit 23.

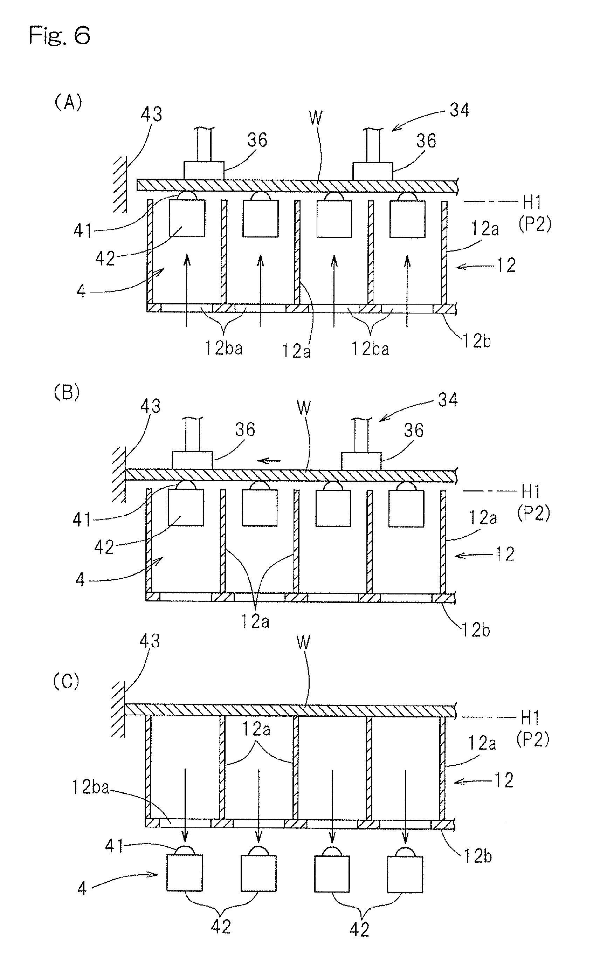

As shown at operations (A) to (C) in Fig. 6, the work support device 4 includes a plurality of ball support bodies 42 each provided with a ball 41 mounted rotatably on a top face thereof. Each of the ball support bodies 42 has such a shape and such a dimension as to pass through the slit 12ba defined in the base plate 12b of the work support table 12. Each of the ball support bodies 42 is installed on a common elevating member (not shown) and is capable of moving up and down by an elevating mechanism (not shown) together with such lifting member. At an ascended position shown at operations (A) and (B) of Fig. 6, an upper end of the ball 41 is protruding upwardly beyond an upper end of the work support plate 12a of the work support table 12 then held at the work carry-in and carry-out height H1.

Positioning of the sheet material workpiece W at the carry-in time is performed in the following manner. Namely, each of the ball support bodies 42 of the work support device 4 passes through the slit 12ba in the work support table 12 then held at the work carry-in and carry-out height H1 at the retracted position P2, and is ascended to a lifted position, followed by placement of the sheet material workpiece W on the balls 41 of the ball support bodies 42 (operation (A) in Fig. 6). Subsequently, the sheet material workpiece W is horizontally moved by the sheet material carrier body 34 and is brought into contact with a positioning end member 43 (operation (B) in Fig. 6). The end member 43 is fitted to the frame 1a of the thermal cutting machine 1 (in Figs. 1 and 2). When the sheet material workpiece W is brought into contact with the end member 43, the sheet material carrier body 34 releases the sheet material workpiece W, followed by descend of each of the ball support bodies 42 (operation (C) in Fig. 6). Accordingly, with the sheet material workpiece W held in a condition as positioned, the sheet material workpiece W is supported by the work support table 12.

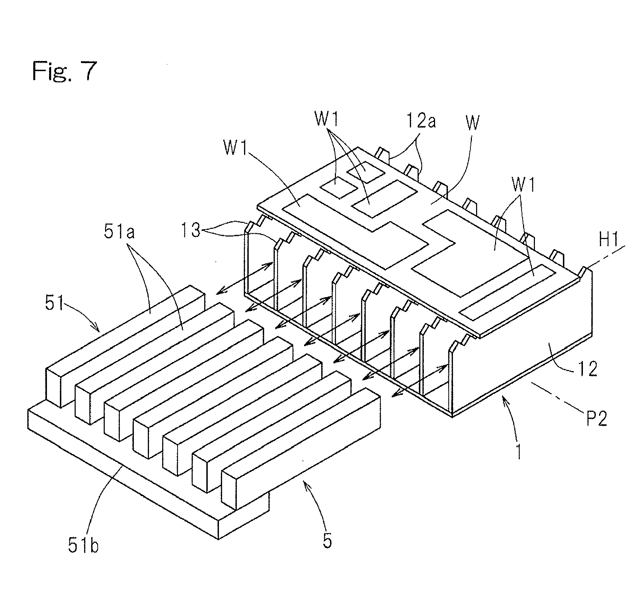

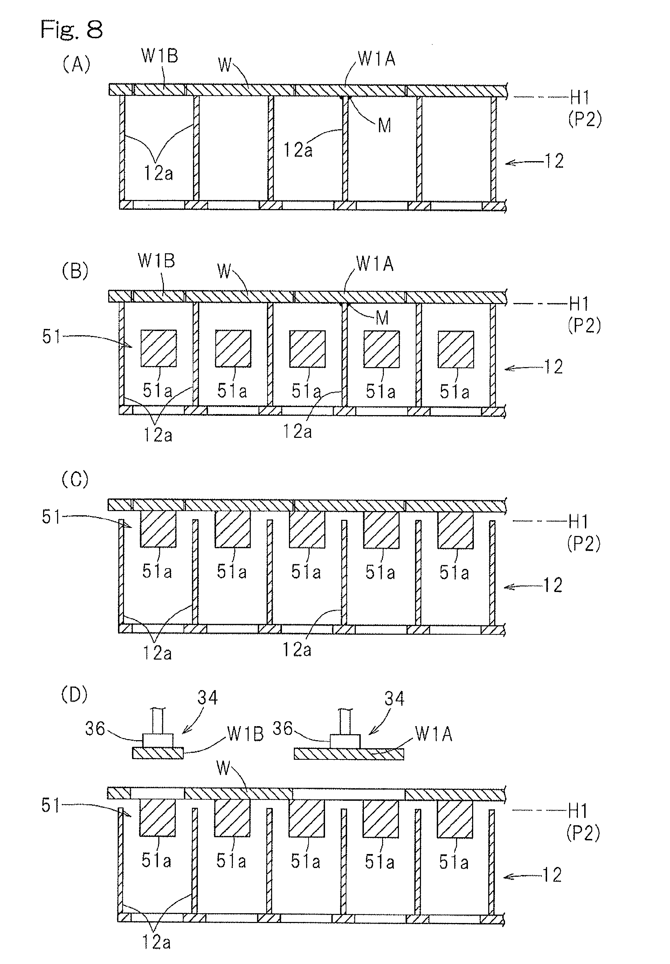

The work lifting device 5 includes, as shown in Fig. 7, a comb-shaped work lifting member 51 having a plurality of elongated elevating elements 51 a disposed side by side relative to each other and each extending in a direction forwardly and rearwardly. Each of the elevating elements 51 a has such a shape and such a dimension as to enable the elevating element 51a to be insertable in between the corresponding neighboring members of the work support plates 12a of the work support table 12 and is connected at a bottom surface side of a rear end thereof with the next adjacent elevating element 51 a by means of a connecting member 51b. The work lifting member 51 is movable by a retracting mechanism (not shown) in the forward and rearward direction for advance and retraction. When the work lifting member 51 is advanced, the elevating element 51 a assumes a condition advanced into between the work support plates 12a of the work support table 12 then held at the work carry-in and carry-out height H1 at the retracted position P2. On the other hand, when the work lifting member 51 is retracted, the elevating element 51 a assumes a condition escaped from the work support plate 12a. Also, the work lifting member 51 is capable of being moved up and down by an elevating mechanism (not shown). In a condition in which the work lifting member 51 is ascended at the advanced position, an upper end of each of the elevating element 51 a assumes a superior position above an upper end of each of the work support plates 12a of the work support table 12 then held at the work carry-in and carry-out height H1 of the retracted position P2, as shown at operations (C) and (D) in Fig. 8.

The operation of the work lifting device 5 at the time the component part W1 is picked up will now be described with particular reference to operations (A) to (D) in Fig. 8.

Operation (A) of Fig. 8 illustrates a condition in which the work support table 12 having placed thereon the sheet material workpiece W which has been cut is held at the work carry-in and carry-out height H1 at the retracted position P2. In the operation (A) in Fig. 8, two component parts W1A and W1B have been cut from the sheet material workpiece W. One component part W1A is thermally welded to one of the work support plates 12a of the work support table 12 at a welding portion M. The other component part W1B, although positioned between the neighboring work support plates 12a, is supported by the remaining material W2 while a cut face in the outer periphery thereof is in contact with the remaining material W2.

From the condition shown at operation (A) in Fig. 8, the work lifting member 51 is advanced to allow each of the elevating elements 51a to enter in between the work support plates 12a of the work support table 12 (operation (B) in Fig. 8). Then, the work lifting member 51 ascends to lift the sheet material workpiece W from the work support table 12 (operation (C) in Fig. 8). Thereby, the welding portion M of such one component part W1A is disjoined from the work support plate 12a.

Thereafter, as shown at operation (D) in Fig. 8, the component parts W1A and W1B are picked up by the sheet material carrier body 34, followed by transport thereof to the component part storing unit 21 (shown in Figs. 1 and 2). Since the welding portion M of the component part W1A is disjoined from the work support plate 12a, the component part W1A can be easily picked up. Also, since the component part W2B is supported from below by the elevating element 51a, even when the suction pad 36 is pressed from above onto the component part W1B during the suction, the component part W1B will not fall in between the work support plates 12a and can be assuredly picked up. In operation (D) in Fig. 8, the component part W1A and the component part W1B are shown as if they are simultaneously picked up, but in reality the component parts W1A and W1B are separately picked up.

As shown in Fig. 10, the work lifting member 51 of the work lifting device 5 may be of a type including a plurality of pins 54 in which all of the elevating elements 51 a are arranged on the same plane. Each of the pins 54 is connected at its lower end with a comb teethed portion 55a of a comb shaped plate 55.

As hereinbefore fully described, the thermal cutting system of the present invention is such that the thermal cutting machine 1 includes the two work support tables 12 and those two work support tables 12 are changeable in position between the processing position P1 and the retracted position P2. Also, the work lifting device 5 is operable to enter beneath the work support table 12 then held at the retracted position P2 and to lift the sheet material workpiece W on the work support table 12, to thereby assist the carry of the component part W1 by the sheet material transport device 3. According to the construction hereinabove described, while the carry operation of the component part W1 is performed by the work lifting device 5 and the sheet material transport device 3 relative to the sheet material workpiece W on the work support table 12 then held at the retracted position P2, the cutting process can be effected by the thermal cutting machine 1 on the sheet material workpiece W on the work support table 12 then held at the processing position P1. Hence, the processing efficiency is high.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### Reference Numerals

- 1: Thermal cutting machine
- 3: Sheet material transport device (Component part carry device)
- 5: Work lifting device
- 12: Work support table
- 12A: First work support table
- 12B: Second work support table
- 13: Work support section
- 51a: Elevating element
- P1: Processing position
- P2: Retracted position
- W: Sheet material workpiece
- W1, W1A, W1B: Component part

## Claims

1. A thermal cutting system comprising:
a thermal cutting machine which includes a work support table having a plurality of work support sections for supporting a sheet material workpiece from below, each of the work support sections being formed in a pin support shape or a serrated shape, the thermal cutting machine being operable to thermally cut a component part from the sheet material workpiece then placed on the work support table;
a work lifting device configured to lift the sheet material workpiece, which has been thermally cut, from the work support table; and
a component part carry device configured to pick up the component part from the sheet material workpiece lifted by the work lifting device and then carry it to the outside of the thermal cutting machine.

2. The thermal cutting system as claimed in claim 1, wherein
the work lifting device includes a plurality of elevating elements which are brought into contact with an undersurface of the sheet material workpiece, and
the elevating elements are moved up and down at a location between the work support sections of the work support table.

3. The thermal cutting system as claimed in claim 1 or 2, wherein
the work support table is changeable in position between a processing position, at which the thermal cutting machine performs a cutting process on the sheet material workpiece, and a retracted position spaced a distance from the processing position,
the work lifting device is capable of moving in and out below the work support table then held at the retracted position, and
the work lifting device lifts the sheet material workpiece on the work support table, when the work support table is positioned below the work support table.
